# EUROPEAN PATENT SPECIFICATION

(11) **EP 3 530 486 B1**
(45) Date of publication and mention of the grant of the patent: **25.08.2021**
(21) Application number: 17861688.4
(22) Date of filing: 29.09.2017
(51) Int. Cl.: B60C 9/22, B60C 5/01, B60C 5/00, B60C 9/20

(54) **TIRE**
REIFEN
PNEU

(30) Priority: 18.10.2016 JP 2016204376
(43) Date of publication of application: 28.08.2019
(73) Proprietor: Bridgestone Corporation, Tokyo 104-8340 (JP)
(72) Inventor: KOUNO, Yoshihide, Tokyo 104-8340 (JP); KON, Seiji, Tokyo 104-8340 (JP); MURATA, Hiroshi, Tokyo 104-8340 (JP)
(74) Representative: Oxley, Robin John George
(86) International application number: PCT/JP2017/035628
(87) International publication number: WO 2018/074197

(56) References cited:
- WO-A1-99/00261
- WO-A1-2008/065832
- JP-A- H0 478 603
- JP-A- 2003 237 315
- JP-A- 2014 210 487
- US-A1- 2009 151 857
- US-A1- 2016 075 180

## Description

### Technical Field

The present disclosure relates to a tire.

### Background Art

Japanese Patent Application Laid-Open (JP-A) No. 2014-210487 discloses a tire including a belt layer in which a reinforcing cord member configured by a reinforcing cord covered by a covering resin is wound onto an outer periphery of a tire frame member in a spiral pattern around the tire circumferential direction, and bonded to the tire frame member. Attention is also drawn to the disclosure of US2016/075180A1.

### SUMMARY OF INVENTION

### Technical Problem

In the conventional example described above, the reinforcing cord member has a rectangular cross-section. Accordingly, the degree of bonding with the tire frame member is sufficient. However, there is still room for improvement of the degree of mutual bonding between sections of the reinforcing cord member that are adjacent in a tire axial direction.

An object of the present disclosure is to improve the durability of a tire including a belt layer configured by winding a resin-covered cord in a spiral pattern.

### Solution to Problem

A tire according to the present invention is provided as claimed in claim 1. Advantageous Effects of Invention

The present disclosure enables the durability of a tire including a belt layer configured by winding a resin-covered cord in a spiral pattern to be improved.

### BRIEF DESCRIPTION OF DRAWINGS

Fig. 1 is a cross-section illustrating a tire according to an exemplary embodiment.
Fig. 2 is a perspective cross-section illustrating a process for winding a resin-covered cord onto a tire case.
Fig. 3 is a side view illustrating a state in which a resin-covered cord has been pressed against an outer periphery of a tire frame member by a press roller.

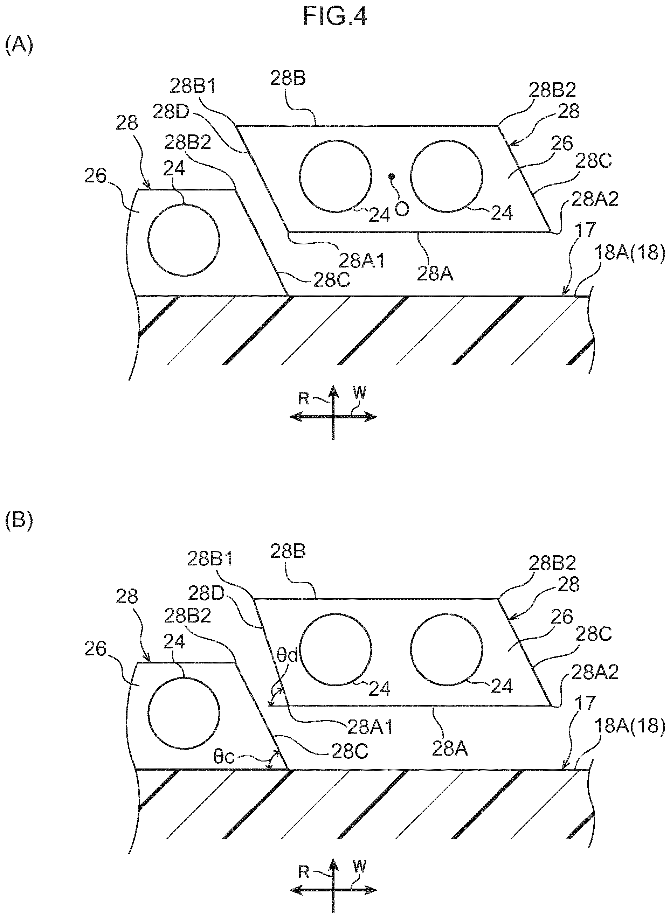

Fig. 4(A)and Fig. 4(B) are cross-sections illustrating a section of resin-covered cord that has been pressed against an outer periphery of a tire frame member and the next section of resin-covered cord to be pressed against the outer periphery of the tire frame member. Fig. 4(A) illustrates an example in which the resin-covered cord has a parallelogram shaped cross-section profile. Fig. 4(B) illustrates an example in which an incline angle of a side face of one section of the resin-covered cord is different to an incline angle of a side face of another section of resin-covered cord that is adjacent in the tire axial direction.
Fig. 5 is a cross-section illustrating a state in which a resin-covered cord is pressed against an outer periphery of a tire frame member by a press roller.
Fig. 6 is a cross-section illustrating an example in which the press roller illustrated in Fig. 5 is provided with a guide section.
Fig. 7(A) to Fig. 7(D) are cross-sections illustrating modified examples of a resin-covered cord, which examples are not used in a tire according to the present invention.

### DESCRIPTION OF EMBODIMENTS

Explanation follows regarding an exemplary embodiment of the present invention, with reference to the drawings. In the drawings, a tire circumferential direction is indicated by an arrow S, a tire axial direction (which may also be understood as a tire width direction) is indicated by an arrow W, and a tire radial direction is indicated by an arrow R. The tire axial direction refers to a direction parallel to the axis of rotation of the tire.

In the following explanation, the sides further from a tire equatorial plane CL along the tire axial direction are referred to as the "tire axial direction outsides" and the side closer toward the tire equatorial plane CL along the tire axial direction is referred to as the "tire axial direction inside". Moreover, the side further from a tire axis in the tire radial direction is referred to as the "tire radial direction outside", and the side closer to the tire axis in the tire radial direction is referred to as the "tire radial direction inside".

The methods for measuring the dimensions of the respective sections are the methods set out in the 2016 Year Book issued by the Japan Automobile Tire Manufacturers Association (JATMA). In cases in which TRA standards or ETRTO standards apply in the place of use or place of manufacture, these standards are followed.

### Tire

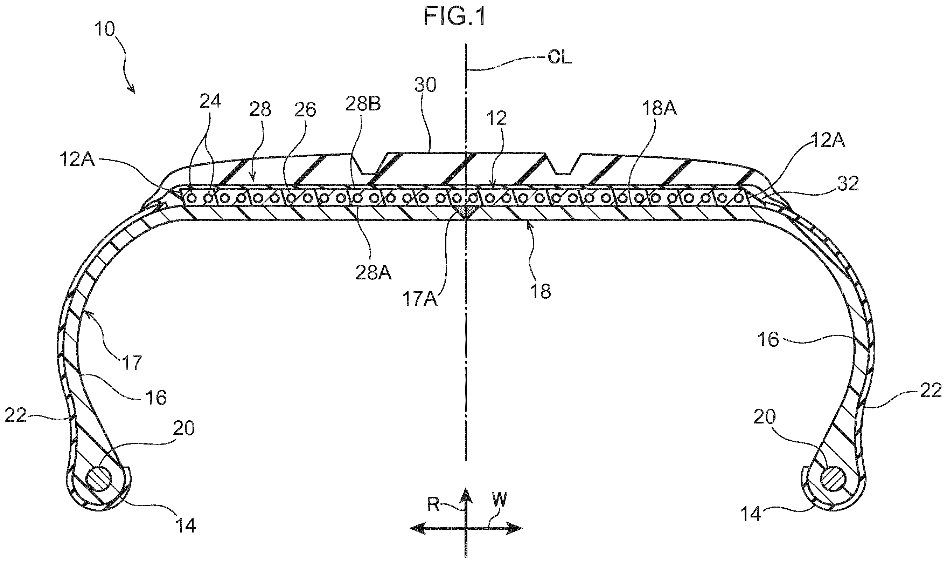

As illustrated in Fig. 1, a tire 10 according to the present exemplary embodiment includes a tire case 17 serving as an example of a circular ring-shaped tire frame member, and a belt layer 12.

The tire case 17 may be a tire case for a rubber tire including a carcass ply (not illustrated in the drawings). However, in the present exemplary embodiment, the tire case 17 is configured by a thermoplastic elastomer serving as an example of a resin material for a tire frame. The tire case 17 is formed in a circular ring shape around the tire circumferential direction.

The tire case 17 is configured including a pair of bead portions 14 disposed spaced apart from each other in the tire axial direction, a pair of side portions 16 extending from the pair of bead portions 14 toward the tire radial direction outside, and a crown portion 18 coupling together the pair of side portions 16. The bead portions 14 are locations that contact a rim (not illustrated in the drawings), and a covering layer 22, described later, is provided on the surface of each of the bead portions 14. The side portions 16 are formed at side portions of the tire 10, and curve gently so as to protrude toward the tire axial direction outsides on progression from the bead portions 14 toward the crown portion 18.

The crown portion 18 is a location that couples a tire radial direction outer end of one of the side portions 16 and a tire radial direction outer end of the other of the side portions 16 together, and supports a tread 30 laid at the tire radial direction outside of the crown portion 18.

In the present exemplary embodiment, the crown portion 18 has a substantially uniform thickness. An outer peripheral face 18A may be formed with a flat profile in cross-section taken along the tire axial direction, or may have a curving profile bulging toward the tire radial direction outside. Note that the outer peripheral face 18A of the crown portion 18 of the present exemplary embodiment configures an outer periphery of the tire case 17 to which the belt layer 12 is provided.

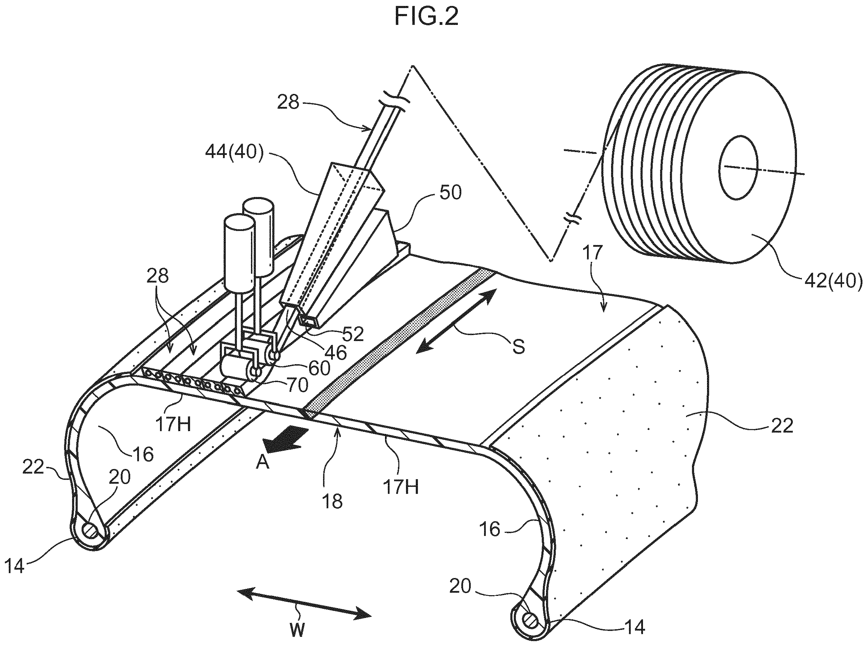

As illustrated in Fig. 2, the tire case 17 is formed by forming a pair of annular tire halves 17H, each including a single bead portion 14, a single side portion 16, and a half-width crown portion 18. The tire halves 17H are made to face each other and end portions of the half-width crown portions 18 are bonded together at the tire equatorial plane CL. The end portions are bonded together using, for example, a resin welding material 17A.

An annular bead core 20 extending around the tire circumferential direction is embedded in each of the bead portions 14. The bead core 20 is configured from a bead cord (not illustrated in the drawings). The bead cord is, for example configured by a metal cord such as a steel cord, an organic fiber cord, a resin-covered organic fiber cord, or a hard resin. Note that the bead core 20 itself may be omitted as long as sufficient rigidity of the bead portion 14 can be secured.

Of the surface of each of the bead portions 14, at least a portion that contacts the rim (not illustrated in the drawings) is formed with the covering layer 22 in order to increase the airtightness against the rim. The covering layer 22 is configured from a material such as a rubber material that is softer and more weather-resistant than the tire case 17.

In the present exemplary embodiment, the covering layer 22 is folded back from an inner face at the tire axial direction inside of each of the bead portions 14 toward the tire axial direction outside, and extends across an outer face of the side portion 16 to the vicinity of a tire axial direction outside end portion 12A of the belt layer 12. An extension end portion of the covering layer 22 is covered by cushion rubber 32, described later, and the tread 30.

Note that the covering layer 22 may be omitted if sealing properties (airtightness) between the bead portion 14 and the rim (not illustrated in the drawings) can be secured by the bead portion 14 of the tire case 17 alone.

Note that the tire case 17 may be configured by an integrally molded article, or the tire case 17 may be manufactured as three or more separate resin members which are then bonded together. For example, respective locations of the tire case 17 (for example the bead portions 14, the side portions 16, and the crown portion 18) may be manufactured separately and then bonded together. In such cases, the respective locations of the tire case 17 (for example the bead portions 14, the side portions 16, and the crown portion 18) may be formed using resin materials with different characteristics to each other.

Reinforcing material (polymer or metal fibers, cord, nonwoven fabric, woven fabric, or the like) may be embedded in the tire case 17.

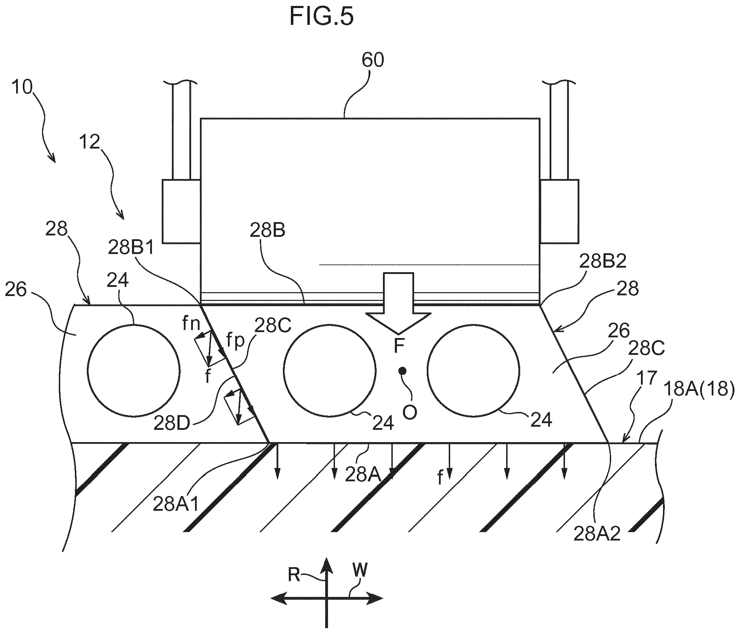

The belt layer 12 is provided at the outer periphery of the tire case 17. In the present exemplary embodiment, the outer periphery of the tire case 17 corresponds to the outer peripheral face 18A of the crown portion 18. In the belt layer 12, a resin-covered cord 28 is wound onto the outer periphery of the tire case 17 in a spiral pattern around the tire circumferential direction and is bonded to the tire case 17, and sections of the resin-covered cord 28 that are mutually adjacent in the tire axial direction are bonded to one another. The resin-covered cord 28 is configured by covering a reinforcing cord 24 with a covering resin 26. As illustrated in Fig. 4 and Fig. 5, "sections of the resin-covered cord 28 that are mutually adjacent in the tire axial direction" refers to a side face 28C of one section of the resin-covered cord 28 and a side face 28D of another section of the resin-covered cord 28 that are adjacent to each other in the tire axial direction. The side faces 28C, 28D are made to oppose each other when winding the resin-covered cord 28 in a spiral pattern.

A tire radial direction inside face 28A of the resin-covered cord 28 is bonded to the outer periphery of the tire case 17. A tire radial direction outside face 28B of the resin-covered cord 28 is bonded to the tread 30 through the cushion rubber 32.

In a cross-section of the resin-covered cord 28 taken along the tire axial direction, illustrated in Fig. 4 and Fig. 5, one tire axial direction side corresponds to the left side, and the other tire axial direction side corresponds to the right side. An end portion 28B1 at the one tire axial direction side of the outside face 28B is positioned further toward the one tire axial direction side (left side) than an end portion 28A1 at the one tire axial direction side of the inside face 28A. An end portion 28B2 at the other tire axial direction side of the outside face 28B is positioned further toward the one tire axial direction side (left side) than an end portion 28A2 at the other tire axial direction side of the inside face 28A.

The inside face 28A and the outside face 28B have, for example, the same width dimension as each other in the tire axial direction. The tire axial direction position of the outside face 28B is disposed at a position shifted (offset) toward the one tire axial direction side (left side) in the tire axial direction with respect to the tire axial direction position of the inside face 28A.

In cross-section taken along the tire axial direction, the side faces 28C, 28D on two tire axial direction sides of the resin-covered cord 28 are disposed with point symmetry to each other about a center O of the resin-covered cord 28. The "center" of this point symmetry corresponds to the centroid of a plane figure configured by the outline of the cross-section. In this cross-section, the side face 28C corresponds to a straight line segment linking the end portion 28B2 of the outside face 28B and the end portion 28A2 of the inside face 28A. The side face 28D corresponds to a straight line segment linking the end portion 28B1 of the outside face 28B and the end portion 28A1 of the inside face 28A. The side faces 28C, 28D are inclined with respect to the tire radial direction, and are also parallel to each other. The inside face 28A and the outside face 28B are likewise parallel to each other. Accordingly, in the example illustrated in Fig. 4(A) and Fig. 5, the cross-section profile of the resin-covered cord 28 as taken along the tire axial direction is a parallelogram shape. Note that the inside face 28A and the outside face 28B are also disposed with point symmetry to each other.

In the example illustrated in Fig. 4(B), the side faces 28C, 28D of the resin-covered cord 28 are inclined with respect to the tire radial direction. Unlike in Fig. 4(A), an incline angle θc of the side face 28C of one section of the resin-covered cord 28 and an incline angle θd of the side face 28D of another section of the resin-covered cord 28 adjacent in the tire axial direction are slightly different to each other.

The incline angle θc is the internal angle formed between the side face 28C and the inside face 28A of the one section of the resin-covered cord 28 (the tire axial direction). The incline angle θd is the external angle formed between the side face 28D and an extension line from the inside face 28A of the other section of the resin-covered cord 28 (the tire axial direction). The incline angles θc, θd have, for example, the relationship θd > θc. Accordingly, a spacing between the opposing side faces 28C, 28D gradually increases on progression from the tire radial direction inside toward the tire radial direction outside. Even though the incline angles θc, θd are slightly different to each other, since the surface of the covering resin 26 melts and runs between the side faces 28C, 28D, it is possible to weld the adjacent resin-covered cord 28 sections together.

The reinforcing cord 24 is, for example, configured from a metal fiber or an organic fiber monofilament (single strand), or from a multifilament (twisted strands) configured by twisting together such fibers. The covering resin 26 is, for example, configured by a thermoplastic elastomer. In Fig. 5, the resin-covered cord 28 includes plural strands of the reinforcing cord 24 within the covering resin 26, with two strands of the reinforcing cord 24 being covered by the covering resin 26 as an example.

Resin materials employed for the tire case 17 and the covering resin 26 in the present exemplary embodiment are not limited to thermoplastic elastomers. For example, thermoplastic resins may be employed as the resin materials. In addition, for the tire case 17, thermosetting resins, and other general purpose resins, as well as engineering plastics (including super engineering plastics) may be employed as the resin materials. Note that the resin materials referred to herein do not include vulcanized rubber.

Thermoplastic resins (including thermoplastic elastomers) are polymer compounds of materials that soften and flow with increased temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break, also as defined by JIS K7113, of 50% or greater. Materials with a Vicat softening temperature, as defined by JIS K7206 (method A), of 130°C may be employed.

Thermosetting resins are curable polymer compounds that form a 3 dimensional mesh structure with increasing temperature. Examples of thermosetting resins include phenolic resins, epoxy resins, melamine resins, and urea resins.

As resin materials, in addition to the above thermoplastic resins (including thermoplastic elastomers) and thermosetting resins, general purpose resins may also be employed, such as (meth)acrylic-based resins, EVA resins, vinyl chloride resins, fluororesins, and silicone-based resins.

### Effects

As illustrated in Fig. 5, in the present exemplary embodiment, in the resin-covered cord 28, the end portion 28B1 at the one tire axial direction side of the outside face 28B is positioned further toward the one tire axial direction side (left side) than the end portion 28A1 at the one tire axial direction side of the inside face 28A. The end portion 28B2 at the other tire axial direction side of the outside face 28B is likewise positioned further toward the one tire axial direction side (left side) than the end portion 28A2 on the other tire axial direction side of the inside face 28A.

The side face 28C on the other tire axial direction side (right side) of the resin-covered cord 28 accordingly faces toward the tire radial direction outside. When winding the resin-covered cord 28 in a spiral pattern, under pressing force F of a press roller 60, described later, the side face 28C on the other tire axial direction side facing toward the tire radial direction outside is pressed by the side face 28D on the one tire axial direction side (left side) of the adjacent section of the resin-covered cord 28. This creates a strong bond between sections of covering resin 26 that are adjacent in the tire axial direction.

In particular, the side faces 28C, 28D on the two tire axial direction sides of the resin-covered cord 28 are disposed with point symmetry to each other about a center O of the resin-covered cord 28. More specifically, the cross-section profile of the resin-covered cord 28 as taken along the tire axial direction is a parallelogram shape. Accordingly, the pressing force F applied by the press roller 60 acts on the outer peripheral face 18A of the crown portion 18 and on the side face 28C on the other tire axial direction side of the adjacent resin-covered cord 28 sections as a distributed load f. Since the side face 28C faces the tire radial direction outside and is inclined with respect to the tire radial direction, the distributed load f input to the side face 28C can be broken down into a component force fp in a direction running along the side face 28C, and a component force fn in a direction normal to the side face 28C. The occurrence of the component force fn in the normal direction increases the tightness of contact between the side faces 28C, 28D of the adjacent resin-covered cord 28 sections in the tire axial direction. This creates a strong bond between the side faces 28C, 28D.

In the tire 10 of the present exemplary embodiment, in which the tire case 17 is formed using a resin material, the durability of the tire 10 including the belt layer 12 configured by winding the resin-covered reinforcing cord 24 (resin-covered cord 28) in a spiral pattern can be improved.

In the example illustrated in Fig. 5, consolidating plural, for example two, strands of the reinforcing cord 24 within the covering resin 26 enables the time taken to wind the resin-covered cord 28 during tire manufacture to be reduced.

In the present exemplary embodiment, the covering resin 26 of the resin-covered cord 28 and the tire case 17 are each configured from a thermoplastic elastomer. This increases the variety of means for bonding the resin-covered cord 28 to the tire case 17. This thereby enables the degrees of freedom when selecting the bonding means to be increased. Specific examples of bonding means include welding using vibration or heat, and adhesion using an adhesive.

### Tire Manufacturing Method

Explanation follows regarding a manufacturing method of the tire 10 of the present exemplary embodiment. First, a thermoplastic resin is injection molded to form a set of the tire halves 17H incorporating the bead cores 20. The covering layer 22 is formed to the outer faces of the tire halves 17H.

Next, the pair of tire halves 17H are made to face each other and end portions of the portions configuring the crown portion 18 are abutted against each other. The resin welding material 17A is applied to the abutting portions in a molten state, and the pair of tire halves 17H are bonded together. The circular ring-shaped tire case 17 is formed in this manner.

Next, explanation follows regarding a process to wind the resin-covered cord 28 onto the outer periphery of the tire case 17. First, the tire case 17 is attached to a tire support device (not illustrated in the drawings) that rotatably supports the tire case 17, and as illustrated in Fig. 2, a cord feeder 40, a heater 50, the press roller 60 serving as a pressing device, and a cooling roller 70 serving as a cooling device are moved to the vicinity of the outer periphery of the tire case 17.

The cord feeder 40 is configured including a reel 42 onto which the resin-covered cord 28 is wound, and a guide member 44. The guide member 44 is a member used to guide the resin-covered cord 28 unwound from the reel 42 onto the outer periphery of the tire case 17 (the outer peripheral face 18A of the crown portion 18). The guide member 44 is tube shaped, and the resin-covered cord 28 passes through the interior of the guide member 44. The resin-covered cord 28 is fed out through an opening 46 of the guide member 44 toward the outer peripheral face 18A of the crown portion 18.

The heater 50 blows hot air onto the thermoplastic resin, thereby heating and melting portions onto which the hot air is blown. The locations onto which the hot air is blown correspond to the inside face 28A of the resin-covered cord 28 to be pressed against the outer peripheral face 18A of the crown portion 18, and a portion of the outer peripheral face 18A of the crown portion 18 where the resin-covered cord 28 is to be laid. Note that in cases in which the resin-covered cord 28 has already been wound once or more around the circumference of the outer peripheral face 18A of the crown portion 18 such that resin-covered cord 28 that has been pressed against the outer peripheral face 18A is present, the hot air is also blown onto the side face 28C thereof.

The heater 50 blows out air heated by an electrical heating coil (not illustrated in the drawings) through a blower outlet 52 in an airflow generated by a fan (not illustrated in the drawings). Note that the configuration of the heater 50 is not limited to that described above, and any configuration may be applied as long as the thermoplastic resin can be heated and melted. For example, a hot iron may be contacted against locations to be melted to heat and melt the contacted portions. Alternatively, locations to be melted may be heated and melted using radiant heat, or may be heated and melted by irradiation with infrared radiation.

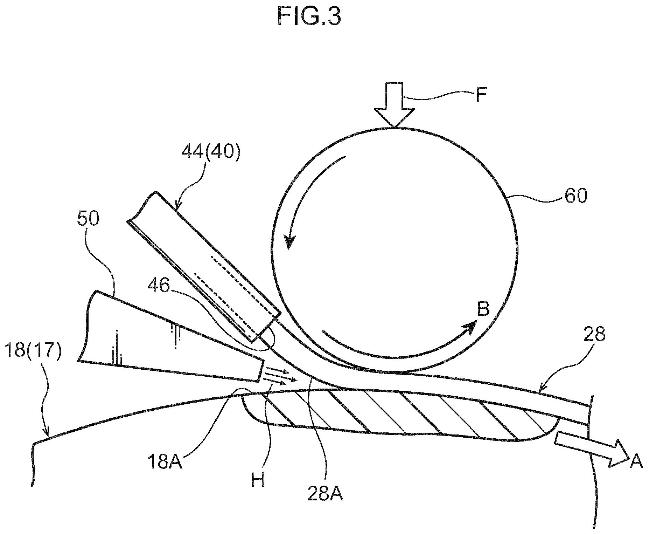

As illustrated in Fig. 3, the press roller 60 presses the resin-covered cord 28 against the outer periphery of the tire case 17 (the outer peripheral face 18A of the crown portion 18), and is capable of adjusting the pressing force F. A roller surface of the press roller 60 is treated so as to prevent molten resin material from adhering thereto. The press roller 60 is capable of rotating, and in a state in which the resin-covered cord 28 is being pressed against the outer periphery of the tire case 17, the press roller 60 performs following rotation (in the arrow B direction) with respect to the rotation direction of the tire case 17 (arrow A direction).

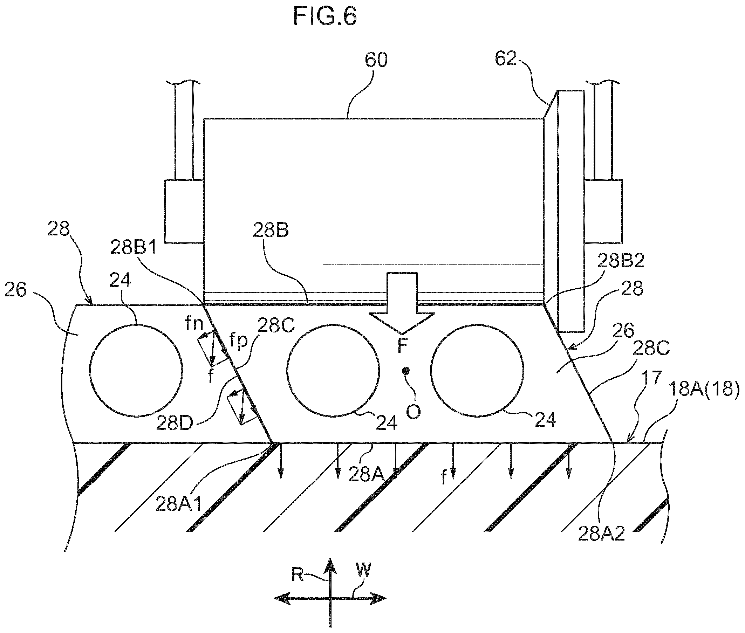

Note that as illustrated in Fig. 6, a large diameter guide portion 62 may be provided to the other axial direction side (right side) of the press roller 60. The large diameter guide portion 62 is capable of suppressing the resin-covered cord 28 from escaping toward the other axial direction side (right side) as the press roller 60 presses the resin-covered cord 28 against the outer periphery of the tire case 17 (the outer peripheral face 18A of the crown portion 18).

As illustrated in Fig. 2, the cooling roller 70 is disposed on the downstream side of the press roller 60 in the rotation direction (arrow A direction) of the tire case 17. The cooling roller 70 cools the resin-covered cord 28 and cools the crown portion 18 side through the resin-covered cord 28 while pressing the resin-covered cord 28 against the outer periphery of the tire case 17 (the outer peripheral face 18A of the crown portion 18). Similarly to the press roller 60, the pressing force of the cooling roller 70 can be adjusted, and the roller surface is treated so as to prevent molten resin material from adhering thereto. Moreover, the cooling roller 70 is capable of rotating similarly to the press roller 60, and in a state in which the resin-covered cord 28 is being pressed against the outer periphery of the tire case 17, the cooling roller 70 rotates following the rotation direction of the tire case 17 (arrow A direction). A liquid (for example water) flows through the interior of the cooling roller 70, and heat exchange with this liquid enables the resin-covered cord 28 contacted by the roller surface to be cooled. Note that the cooling roller 70 may be omitted in cases in which the molten resin material is cooled naturally.

As illustrated in Fig. 2 and Fig. 3, when winding the resin-covered cord 28 onto the outer periphery of the tire case 17, the tire case 17 that is attached to the tire support device (not illustrated in the drawings) is rotated in the arrow A direction, and the resin-covered cord 28 is fed out toward the outer peripheral face 18A of the crown portion 18 through the opening 46 of the cord feeder 40.

Hot air is blown through the blower outlet 52 of the heater 50, and the inside face 28A of the resin-covered cord 28 is adhered to a molten portion of the crown portion 18 as the inside face 28A of the resin-covered cord 28 and the portion of the crown portion 18 where the resin-covered cord 28 is to be laid are heated and melted. The resin-covered cord 28 is then pressed against the outer peripheral face 18A of the crown portion 18 by the press roller 60. When this is performed, the side faces 28C, 28D of sections of the resin-covered cord 28 that are adjacent in the tire axial direction are also bonded together (Fig. 5). The outside face 28B of the resin-covered cord 28 then contacts the cooling roller 70 such that the molten portion of the crown portion 18 and the molten portion of the resin-covered cord 28 are cooled and thereby solidified through the resin-covered cord 28. The resin-covered cord 28 and the crown portion 18 are welded together in this manner.

By winding the resin-covered cord 28 onto the outer peripheral face 18A of the crown portion 18 around the tire circumferential direction in a spiral pattern and pressing the resin-covered cord 28 against the outer peripheral face 18A in this manner, the belt layer 12 is formed at the outer periphery of the tire case 17, specifically, at the outer periphery of the crown portion 18. Note that in order to wind the resin-covered cord 28 in a spiral pattern, the position of the opening 46 of the cord feeder 40 may be moved in the tire axial direction as the tire case 17 rotates, or the tire case 17 may be moved in the tire axial direction.

Note that the tension of the resin-covered cord 28 may be adjusted by applying a brake to the reel 42 of the cord feeder 40, or by providing a roller or the like (not illustrated in the drawings) to adjust the tension partway along a path guiding the resin-covered cord 28. Adjusting the tension enables snaking in the placement of the resin-covered cord 28 to be suppressed.

Although not described in detail, the tire 10 is completed by providing the tread 30 at the tire radial direction outside of the tire case 17 and the belt layer 12 in a vulcanization process. The cushion rubber 32 may be disposed between the tread 30, and the tire case 17 and belt layer 12.

### Other Exemplary Embodiments

Although explanation has been given regarding an example of an exemplary embodiment of the present invention, exemplary embodiments of the present invention are not limited to the above, and obviously various modifications may be implemented within a range not departing from the scope of the present invention.

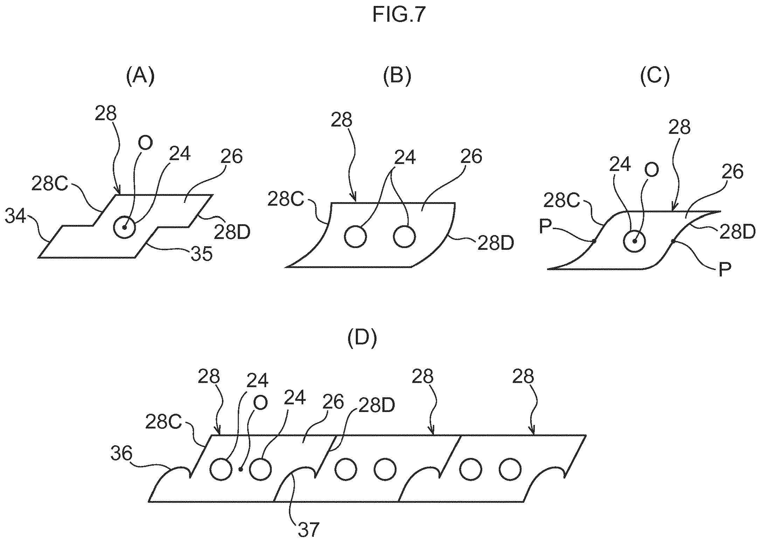

In other examples, which are not embodiments of the present invention, the cross-section profile of the resin-covered cord 28 may have profiles such as in the modified examples illustrated in Fig. 7(A) to Fig. 7(D). In Fig. 7(A) to Fig. 7(D), the one tire axial direction side corresponds to the right side and the other tire axial direction side corresponds to the left side, the reverse of in Fig. 5.

In the example illustrated in Fig. 7(A), the side faces 28C, 28D of the resin-covered cord 28 are formed with interlocking stepped profiles. Specifically, the side face 28C is provided with a protrusion 34, and the side face 28D is provided with a recess 35 shaped so as to be capable of interlocking with the protrusion 34. For example, the protrusion 34 and the recess 35 each have a parallelogram shape. The side face 28C and the protrusion 34, and the side face 28D and the recess 35, are thus disposed with point symmetry with respect to the center O of the resin-covered cord 28.

In the example illustrated in Fig. 7(B), the side faces 28C, 28D of the resin-covered cord 28 are not disposed with point symmetry, but are formed with interlocking arc profiles. For example, the side face 28C is formed with a recessed profile, and the side face 28D is formed with a protruding profile. Note that the side face 28C may be configured with a protruding profile and the side face 28D may be configured with a recessed profile.

In the example illustrated in Fig. 7(C), the side faces 28C, 28D of the resin-covered cord 28 are formed with curving profiles with inflection points P so as to be capable of interlocking, and are disposed with point symmetry about the center O of the resin-covered cord 28.

In the example illustrated in Fig. 7(D), the side faces 28C, 28D of the resin-covered cord 28 are not disposed with point symmetry, but are formed with profiles that engage with each other when pulled in the tire axial direction. Specifically, the side face 28C is provided with an engaging projection 36, and the side face 28D is provided with an engaging recess 37 with a shape capable of engaging with the engaging projection 36 in the tire axial direction. In other words, the side faces 28C, 28D have anchoring profiles.

The number of strands of the reinforcing cord 24 covered in the covering resin 26 is not limited to two, and three or more strands of the reinforcing cord 24 may be provided. Alternatively, a single strand of the reinforcing cord 24 may be covered by the covering resin 26 (Fig. 7(A)).

## Claims

1. A tire (10) comprising:
a ring-shaped tire frame member (17); and
a belt layer (12) that is provided at an outer periphery of the tire frame member (17), and in which a resin-covered cord (28), which is configured by covering a reinforcing cord (24) with a covering resin (26), is wound onto the outer periphery of the tire frame member (17) in a spiral pattern around a tire circumferential direction (S), and is bonded to the tire frame member (17), with sections of the resin-covered cord (28) that are mutually adjacent in a tire axial direction (W) being bonded to each other,
wherein the covering resin (26) is configured by a thermoplastic elastomer or a thermoplastic resin, **characterized in that**:
an end portion (28B1) at one tire axial direction side of a tire radial direction outside face (28B) of the resin-covered cord (28) is positioned further toward the one tire axial direction side than an end portion (28A1) at the one tire axial direction side of a tire radial direction inside face (28A) of the resin-covered cord (28), and an end portion (28B2) at another tire axial direction side of the outside face (28B) is positioned further toward the one tire axial direction side than an end portion (28A2) at the other tire axial direction side of the inside face (28A), and
the cross-sectional profile of the thermoplastic elastomer or thermoplastic resin covered cord (28) as taken along the tire axial direction is a parallelogram shape.

2. The tire (10) of claim 1, wherein, in a cross-section taken along the tire axial direction (W), side faces (28C, 28D) on two tire axial direction sides of the resin-covered cord (28) are disposed with point symmetry to each other about a center (O) of the resin-covered cord (28).

3. The tire (10) of either claim 1 or claim 2, wherein the resin-covered cord (28) includes a plurality of strands of the reinforcing cord (24) within the covering resin (26).

4. The tire (10) of any one of claim 1 to claim 3, wherein the tire frame member (17) is configured by a thermoplastic elastomer.

5. The tire (10) of any one of claim 1 to claim 4, wherein the tire frame member (17) is configured by a resin material.

## Patentansprüche

1. Reifen (10), der Folgendes umfasst:
ein ringförmiges Reifenrahmenelement (17); und
eine Gürtellage (12), die an einem äußeren Umfang des Reifenrahmenelements (17) bereitgestellt wird und in der ein harzüberzogener Kord (28), der durch Überziehen eines Verstärkungskords (24) mit einem Überzugsharz (26) konfiguriert ist, in einem Spiralmuster um eine Reifenumfangsrichtung (S) auf den äußeren Umfang des Reifenrahmenelements (17) gewickelt ist und an das Reifenrahmenelement (17) gebunden ist, wobei Abschnitte des harzüberzogenen Kords (28), die in einer Reifenaxialrichtung (W) aneinander angrenzen, aneinander gebunden sind,
wobei das Überzugsharz (26) durch ein thermoplastisches Elastomer oder ein thermoplastisches Harz konfiguriert ist, **dadurch gekennzeichnet, dass**:
ein Endabschnitt (28B1) an einer Reifenaxialrichtungsseite einer in Reifenradialrichtung äußeren Fläche (28B) des harzüberzogenen Kords (28) weiter hin zu der einen Reifenaxialrichtungsseite angeordnet ist als ein Endabschnitt (28A1) an der einen Reifenaxialrichtungsseite einer in Reifenradialrichtung inneren Fläche (28A) des harzüberzogenen Kords (28) und ein Endabschnitt (28B2) an einer anderen Reifenaxialrichtungsseite der äußeren Fläche (28B) weiter hin zu der einen Reifenaxialrichtungsseite angeordnet ist als ein Endabschnitt (28A2) auf der anderen Reifenaxialrichtungsseite der inneren Fläche (28A); und
das Querschnittsprofil des mit thermoplastischem Elastomer oder thermoplastischem Harz überzogenen Kords (28), vorgenommen entlang der Reifenaxialrichtung, eine Parallelogrammform aufweist.

2. Reifen (10) nach Anspruch 1, wobei, in einem Querschnitt, vorgenommen entlang der Reifenaxialrichtung (W), Seitenflächen (28C, 28D) auf zwei Reifenaxialrichtungsseiten des harzüberzogenen Kords (28) mit Punktsymmetrie zueinander um einen Mittelpunkt (O) des harzüberzogenen Kords (28) angeordnet sind.

3. Reifen (10) nach Anspruch 1 oder Anspruch 2, wobei der harzüberzogene Kord (28) eine Vielzahl von Strängen des Verstärkungskords (24) innerhalb des Überzugsharzes (26) einschließt.

4. Reifen (10) nach einem der Ansprüche 1 bis 3, wobei das Reifenrahmenelement (17) durch ein thermoplastisches Elastomer konfiguriert ist.

5. Reifen (10) nach einem der Ansprüche 1 bis 4, wobei das Reifenrahmenelement (17) durch ein Harzmaterial konfiguriert ist.

## Revendications

1. Bandage pneumatique (10), comprenant :
un élément de cadre de forme annulaire (17) du bandage pneumatique ; et
une couche de ceinture (12) disposée au niveau d'une périphérie externe de l'élément de cadre du bandage pneumatique (17), et dans lequel un câblé recouvert de résine (28), configuré en recouvrant un câblé de renforcement (24) d'une résine de recouvrement (26), est enroulé sur la périphérie externe de l'élément de cadre du bandage pneumatique (17) dans un motif en spirale autour d'une direction circonférentielle du bandage pneumatique (S) et est relié à l'élément de cadre du bandage pneumatique (17), des sections du câblé recouvert de résine (28) qui sont mutuellement adjacentes dans une direction axiale du bandage pneumatique (W) étant reliées les unes aux autres ;
dans lequel la résine de recouvrement (26) est configurée par un élastomère thermoplastique ou une résine thermoplastique, **caractérisé en ce que** :
une partie d'extrémité (28B1) au niveau d'un côté, dans la direction axiale du bandage pneumatique, d'une face externe (28B), dans la direction radiale du bandage pneumatique, du câblé recouvert de résine (28) est positionnée davantage vers ledit un côté, dans la direction axiale du bandage pneumatique, qu'une partie d'extrémité (28A1) au niveau dudit un côté, dans la direction axiale du bandage pneumatique, d'une face interne (28A), dans la direction radial du bandage pneumatique, du câblé recouvert de résine (28), et une partie d'extrémité (28B2), au niveau d'un autre côté, dans la direction axiale du bandage pneumatique, de la face externe (28B) est positionnée davantage vers ledit un côté, dans la direction axiale du bandage pneumatique, qu'une partie d'extrémité (28A2) au niveau de l'autre côté, dans la direction axiale du bandage pneumatique, de la face interne (28A) ; et
le profil de section transversale du câblé recouvert d'un élastomère thermoplastique ou d'une résine thermoplastique (28), pris le long de la direction axiale du bandage pneumatique, a une forme en parallélogramme.

2. Bandage pneumatique (10) selon la revendication 1, dans lequel, dans une section transversale prise le long de la direction axiale du bandage pneumatique (W), des faces latérales (28C, 28D) sur deux côtés, dans la direction axiale du bandage pneumatique, du câblé recouvert de résine (28), sont disposées en symétrie ponctuelle l'une par rapport à l'autre autour d'un centre (O) du câblé recouvert de résine (28).

3. Bandage pneumatique (10) selon la revendication 1 ou la revendication 2, dans lequel le câblé recouvert de résine (28) inclut une pluralité de torons du câblé de renforcement (24) à l'intérieur de la résine de recouvrement (26).

4. Bandage pneumatique (10) selon l'une quelconque des revendications 1 à 3, dans lequel l'élément de cadre du bandage pneumatique (17) est configuré par un élastomère thermoplastique.

5. Bandage pneumatique (10) selon l'une quelconque des revendications 1 à 4, dans lequel l'élément de cadre du bandage pneumatique (17) est configuré par un matériau de résine.
